Europäisches Patentamt

**European Patent Office**

Office européen des brevets

(11) Publication number: **0 009 379**
**A1**

## (12) EUROPEAN PATENT APPLICATION

(21) Application number: 79301896.1

(22) Date of filing: 14.09.79

(51) Int. Cl.³: **A 62 B 1/20,** B 63 B 27/28,
B 64 D 25/14

(30) Priority: 19.09.78 GB 3735678

(43) Date of publication of application: 02.04.80
Bulletin 80/7

(84) Designated Contracting States: BE CH DE FR IT NL SE

(71) Applicant: RFD INFLATABLES LIMITED, Catteshall
Lane, Godalming Surrey GU7 1LH (GB)

(72) Inventor: Edwards, David Vernon, "Four Houses",
Loxwood West Sussex (GB)

(74) Representative: Leistikow, Frederick Walter Rudolph et
al, BREWER & SON 5-9 Quality Court Chancery Lane,
London WC2A 1HT (GB)

(54) Escape installations.

(57) The invention seeks to provide an escape installation for emergency evacuation of a person or persons from an exit opening (12) in, for example, a building (13). The invention provides an escape slide assembly (14) which is mounted at the exit opening (12) for pivotal movement about a horizontal axis from a closed position in which the escape slide assembly (14) closes the exit opening (12) to an open position in which an inflatable escape slide (28) is inflated and deployed to provide a slideway leading from the exit opening (12) to a surface beneath the exit opening (12). As well as being used in buildings (13), the escape installation can be used in ships or aircraft.

## ESCAPE INSTALLATIONS

Previously proposed installations for emergency evacuation of a person or persons from an exit opening above a surface, for example an exit opening in a building, include a closure for an exit opening pivotable about a vertical axis between a closed position in which the closure closes the exit opening and an open position in which the closure opens the exit opening. An inflatable escape slide falls out of the closure on opening and is inflated from an inflation system arranged away from the closure. Such an installation has the disadvantage that the remote location of the inflation system makes installation difficult and that the underside of the inflated escape slide is, in the case of a fire in a building, exposed to heat from parts of the building beneath the escape slide.

An object of the invention is to provide an escape installation for emergency evacuation of a person or persons which is self-contained and therefore easily installed and which is readily used by evacuees.

According to the invention, there is provided an escape installation for emergency evacuation of a person or persons from an exit opening above a surface, the installation comprising an escape slide assembly having a mounting for connection at or adjacent a lower edge of the exit opening to allow pivotal movement of the assembly about a horizontal or substantially horizontal axis between an open position and a closed position in which the escape slide assembly closes or substantially closes the exit opening, the escape slide assembly including an escape slide having inflatable side walls between which extends a slideway, the escape slide being uninflated in the closed position of the assembly, the installation being operable in emergency to release the escape slide assembly from the closed position, the escape slide assembly upon release, pivoting to the open position to open the exit opening, an inflation system of the installation being actuated on operation of the installation to inflate the escape slide and to deploy the escape slide thus providing a slideway extending from the exit opening to the surface beneath the exit opening, the initial length of the escape slide from the exit opening overlying the remainder of the open escape slide assembly.

The following is a more detailed description of one embodiment of the invention, by way of example, reference being made to the accompanying drawings in which:-

Figure 1 is an elevation of an escape installation in a closed position and mounted over, and viewed from the exterior of an exit opening from a building,

Figure 2 is a section on the line II-II of Figure 1,

Figure 3 is a section on the line III-III of Figure 1,

Figure 4 is an elevation of the escape installation of Figures 1 to 3 in the closed position, the view being partially broken away and being from the interior of the exit opening,

Figure 5 is a perspective view of the exit opening showing the escape installation of Figures 1 to 4 in an open position,

Figure 6 is a side elevation of an inflated and deployed escape slide of the escape installation of Figures 1 to 5, and

Figure 7 is an elevation of the inflated and deployed escape slide of Figure 6.

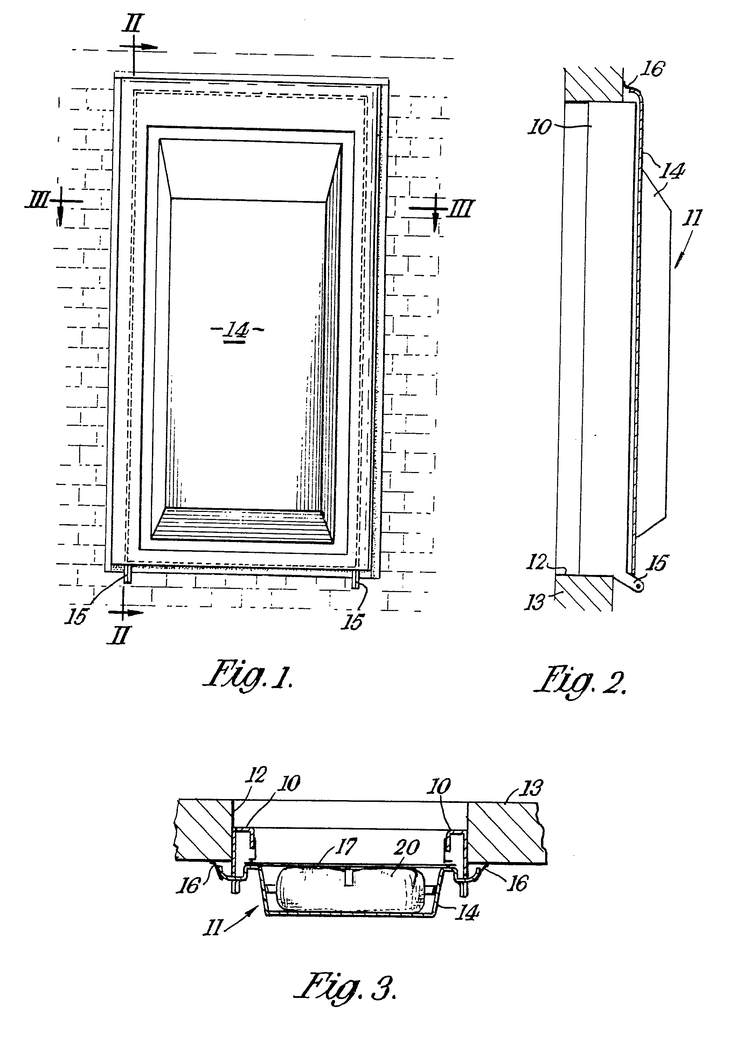

Referring first to Figures 1 to 4, the escape installation comprises a fixed frame 10 and a movable escape slide assembly 11. The frame 10 is rectangular (see Figure 1) is made from rolled steel members and is fixed securely in a corresponding rectangular aperture forming an exit opening 12 from a building 13. It will be appreciated that the frame can equally well be fixed in an exit opening in the side of a ship or in an exit opening in an aircraft or indeed any exit opening arranged above a surface.

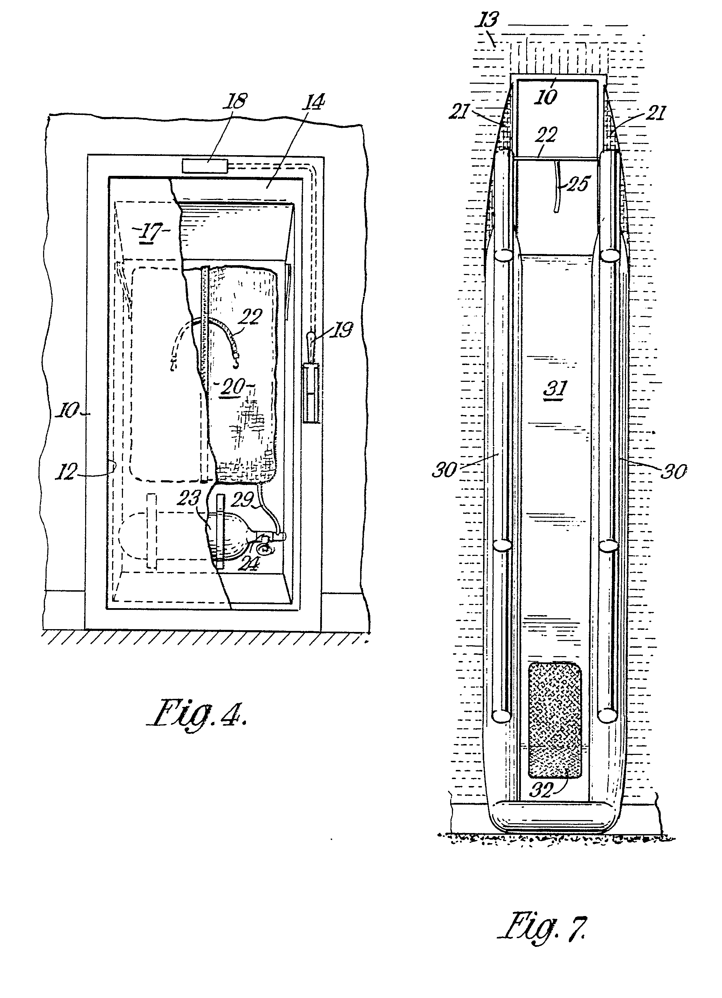

The escape slide assembly 11 comprises a casing 14 carrying at a lower edge thereof mountings 15 for the pivotal connection of the casing 14 to the frame 10 for movement of the casing 14 about a horizontal axis between a closed position, shown in Figures 1 to 4, and an open position, shown in Figure 5. In the closed position, a seal 16 provided along the vertical side edges and the top edges of the casing 14 seals against the building 13 to close the exit opening from the exterior (see Figures 1 to 3). As shown in Figures 3 and 4, a fabric cover connected to the upper edge of the casing 14 covers the interior face of the casing 14.

The casing 14 is held in the closed position by a latch 18 (see Figure 4) which can be released by an operating handle 19, normally enclosed in a breakable glass case (not shown) to prevent inadvertent operation. The casing 14 includes a recess holding a package 20 containing a folded, deflated escape slide, described in more detail hereinafter. The recess also holds two side screens 21 and a safety strap 22 whose construction and operation are also described in more detail hereinafter. Further, an inflation system for the escape slide is carried in the recess and comprises a cylinder of compressed gas 23 connected to the packaged escape slide through an operating head 24.

In use, in an emergency such as a fire in the building, the glass of the casing around the handle 19 is broken using a small hammer provided adjacent the handle 19. The handle 19 is then pulled to release the latch 18 and allow the casing 10 to pivot under the off-centre weight of the slide package 20 (see Figure 3).

The two side screens 21 are triangular in shape; each side screen 21 has one edge connected to a vertical side edge of the frame and another side edge connected to the adjacent vertical side edge of the casing 14. The safety strap 22 has an end connected to each screen at a point adjacent the vertical sides of the frame 10 and midway between the top and bottom of the frame 10. A further strap 25 (see Figure 7) is connected between the safety strap 22 and a Velcro (Trade Mark) strip 26 closing the package 20.

Thus, as the casing 14 opens, the side screens 21 are pulled from the recess and the safety strap 22 deploys across the exit opening 12 to prevent passage through the exit opening (see Figures 5 and 7). The movement of the package 20 away from the safety strap 22 causes the further strap 25 to pull open the Velcro (Trade Mark) strip 26 thus opening the package 20. At the same time, the opening of the casing 14 causes the cover 17 to be thrown away from the casing 14 to uncover the package 20.

The side screens 21 limit the opening of the casing by their dimensions and they also serve to decelerate the casing 14 by their wind resistance. Further deceleration is achieved by break-ties 27 provided on the screens 21 which part under the load imposed by the falling casing 14. In this way, the casing 14 is halted in the open position shown in Figure 5.

As the casing 14 halts, the inertia of the packed deflated escape slide 28 throws the escape slide 28 out of the open package 20 and over the outermost edge of the casing 14. This movement of the packaged escape slide 27 pulls a lanyard (not shown) connected between the escape slide 21 and the operating head 24 to withdraw a slug (not shown) in the operating head 24 and open the gas cylinder 23. Should this lanyard not function, a manually operated lanyard (not shown) is provided for withdrawing the slug. The withdrawal of the slug allows gas under pressure to pass from the cylinder 23 through a hose 29 and a pressure regulator (not shown) to aspirators mounted on the escape slide 28. The high pressure gas passing through the aspirators induces further external air to enter the escape slide 28 to inflate the escape slide 28 to its working pressure.

The escape slide 28 is packed to ensure that it is positioned correctly in front of the exit opening 12. This correct positioning is assisted by a strap (not shown) which passes around the deflated slide and remains in position until sufficient pressure is attained in the escape slide during inflation to part a break-tie in the strap to allow the slide to deploy with sufficient momentum to ensure correct positioning of the inflated escape slide on the ground.

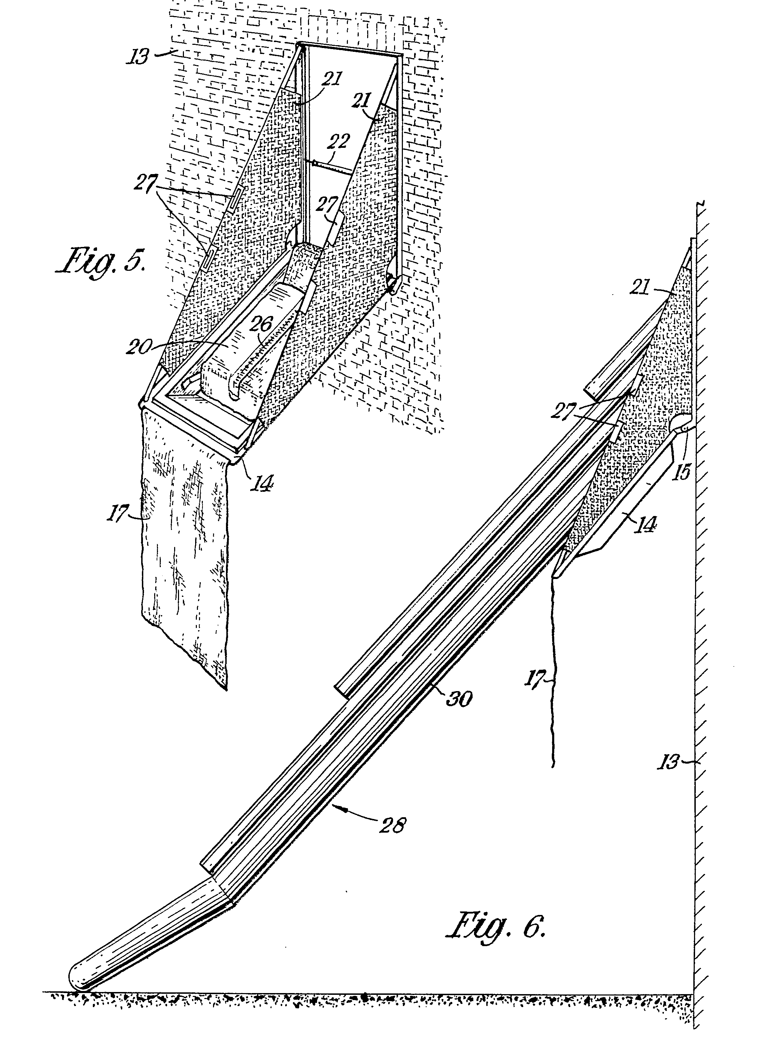

Referring to Figures 6 and 7, the escape slide 28 comprises inflatable side tubes 30 between which is stretched a slideway 31, having deceleration patch 32 adjacent the ground.

When the escape slide 28 is fully inflated, the safety strap 22 is removed and a person or persons evacuate the building by sitting on the slideway 30 and sliding down the slideway 30. The side screens 21 are made from a fire retardent material to protect an evacuee from smoke and flames and they also serve to stabilize the escape slide 28 in high winds. The cover 17 is also a fire retardent material and the casing 14 and the cover 17 hanging from the end of the casing in the open position protect the underneath surface of the escape slide 28 from heat.

The height of the side tubes 30 together with the side screens 21 provide psychological reassurance for reluctant evacuees. The deceleration patch 32 slows evacuees before they reach the ground. When the installation described above with reference to the drawings is installed in a building, it may be installed in an existing door aperture or in a specific prepared position. The frame 10 may be placed in any position in a building which allows access to the ground, such as a balcony, roof or wall.

CLAIMS

1.  An escape installation for emergency evacuation of a person or persons from an exit opening above a surface, the installation comprising an escape slide assembly having a mounting for connection at or adjacent a lower edge of the exit opening to allow pivotal movement of the assembly about a horizontal or substantially horizontal axis between an open position and a closed position in which the escape slide assembly closes or substantially closes the exit opening, the escape slide assembly including an escape slide having inflatable side walls between which extends a slideway, the escape slide being uninflated in the closed position of the assembly, the installation being operable in emergency to release the escape slide assembly from the closed position, the escape slide assembly upon release, pivoting to the open position to open the exit opening, an inflation system of the installation being actuated on operation of the installation to inflate the escape slide and to deploy the escape slide thus providing a slideway extending from the exit opening to the surface beneath the exit opening, the initial length of the escape slide from the exit opening overlying the remainder of the open escape slide assembly.

2.  An escape installation according to claim 1 wherein the uninflated escape slide is contained in a package, the package being opened, in use, to allow inflation of the escape slide as the escape slide assembly moves to the open position.

3.  An escape installation according to claim 2 wherein, in use, the movement of the escape slide assembly to the open position throws the packaged escape slide from the opened package to a position for inflation and deployment.

4. An escape installation according to claim 2 or claim 3 wherein the package, in the closed position of the escape slide assembly, is held in a recess in a casing of the assembly, the casing, in use, in the closed position, providing an outer covering for the installation, the casing also carrying the pivotal mounting and, in the closed position, closing or substantially closing the exit opening.

5. An escape installation according to any one of claims 2 to 4 wherein the escape slide is, in use, as the assembly moves to the open position, arranged to leave the package and adopt a position for inflation and deployment of the escape slide.

6. An escape installation according to any one of claims 1 to 5 and further comprising side panels which, in use, are connected between the escape slide assembly and the exit opening and which, as, in use, the assembly approaches the open position, limit the opening movement of the escape slide assembly, the side panels, in the open position of the escape slide assembly, providing a pair of screens spaced on either side of the slidepath and extending between the exit opening and said initial length of the escape slide.

7. An escape installation according to claim 6 wherein the side panels include break-ties which part under the load imposed on the panels, in use, by the opening assembly and which decelerate the assembly as the assembly approaches the open position.

8. An escape installation according to any one of claims 1 to 7 wherein there is provided a cover which, in use, in the closed position of the assembly, covers the exit opening thus hiding the escape slide assembly from the interior of the exit opening and which, in use, on initial movement of the assembly away from the open position, moves to uncover the escape slide, the cover, in use, in the open position of the assembly, depending from an end of the escape slide assembly remote from the exit opening.

9. An escape installation according to any one of claims 1 to 8, and further including a frame for connection to the exit opening to define said exit opening, the escape slide assembly being pivotally mounted on the frame and closing into the frame.

10. An escape installation according to claim 8 wherein, in the closed position, the escape slide assembly is connected to the frame by a latch, the latch being releaseable to commence operation of the installation.

11. An escape installation according to any one of claims 1 to 10 wherein the inflation system is mounted on the escape slide assembly and is operated automatically when the assembly is at or adjacent the open position.

12. An escape installation according to claim 11 when dependent upon claim 3 wherein the automatic operation of the inflation system is by means of a lanyard connected between the packaged escape slide and the inflation system, the lanyard, in use, pulling to operate the inflation system as the escape slide is thrown from the package.

13. An escape installation according to claim 11 or claim 12 wherein, in addition to the automatic operation of the inflation system, a device is provided which, in use, can be operated manually to operate the inflation system.

14. An escape installation according to any one of claims 1 to 13 and further including a safety strap which, in use, on movement of the escape slide assembly to the open position, extends across the exit opening to prevent access to the escape slide until the escape slide is fully deployed.

15. An escape installation according to any one of claims 1 to 14 wherein the slideway includes a patch of material towards that end thereof which, in use, is adjacent the surface and which, in use, decelerates a sliding person.

16. An escape installation substantially as hereinbefore described with reference to the accompanying drawings.

0009379

Fig. 1.

Fig. 2.

Fig. 3.

**Fig.4.**

**Fig.7.**

0009379

*Fig. 5.*

13

21

21

22

27

27

26

20

14

17

*Fig. 6.*

21

27

15

14

17

30

28

13

0009379
Application number

EP 79 301 896.1

**European Patent Office**

## EUROPEAN SEARCH REPORT

| | DOCUMENTS CONSIDERED TO·BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | US – A – 3 465 991 (H.C. BANAS et al.) <br> * entire document * <br> -- | 1-5, 10-12 | A 62 B 1/20 <br> B 63 B 27/28 <br> B 64 D 25/14 |
| | GB – A – 1 389 591 (MITSUBISHI DENKI K.K.) <br> * page 4, lines 41 to 57; fig. 6 * <br> -- | 1-6 | |
| | US – A – 3 771 749 (E.H. SMIALOWICZ) <br> * fig. 1, 9 * <br> -- | 1 | |
| | DE – A – 2 144 037 (B.F. GOODRICH CO.) <br> * fig. 1 * <br> -- | 15 | **TECHNICAL FIELDS SEARCHED (Int.Cl.3)** |
| A | BE – A – 703 290 (A. CRESPIN) <br> * fig. 1 to 3 * <br> -- | 1 | A 62 B 1/00 <br> B 63 B 27/00 <br> B 64 D 25/00 |
| A | FR – A – 867 957 ( E. TOULAN) <br> * fig. 1 * <br> -- | 1 | |
| A | US – A – 4 109 759 (O.G. CUNDIFF) <br> * fig. 2 * <br> -- | 1 | **CATEGORY OF CITED DOCUMENTS** |
| A | US – A – 2 656 967 (L.A. EASTMAN) <br> * fig. 1, 3, 5 * <br> -- | | X: particularly relevant <br> A: technological background <br> O: non-written disclosure <br> P: intermediate document <br> T: theory or principle underlying the invention <br> E: conflicting application <br> D: document cited in the application <br> L: citation for other reasons |

X The present search report has been drawn up for all claims

&: member of the same patent family, corresponding document

| Place of search <br> Berlin | Date of completion of the search <br> 28-11-1979 | Examiner <br> KANAL |
|---|---|---|

EPO Form 1503.1  06.78